# EUROPÄISCHE PATENTANMELDUNG

(11) **EP 3 839 372 A1**
(43) Veröffentlichungstag der Anmeldung: **23.06.2021**
(21) Anmeldenummer: 19218755.7
(22) Anmeldetag: 20.12.2019
(51) Int. Cl.: F24T 10/15

(54) **ANORDNUNG VON ERDKOLLEKTOREN FÜR GROSSANLAGEN IN DER KALTEN NAHWÄRMENUTZUNG**

(71) Anmelder: Steinhäuser GmbH & Co. KG, 96120 Bischberg (DE)
(72) Erfinder: Steinhäuser, Johann Harry, 96179 Rattelsdorf (DE)
(74) Vertreter: Hauck Patentanwaltspartnerschaft mbB

(57) **Zusammenfassung**

Anordnung von Erdkollektoren für Groß anlagen in der kalten Nahwärmenutzung umfassend eine erste Gruppe aus Erdkollektoren, die jeweils vorlaufseitig über eine erste vorlaufseitige Abzweigung mit einer ersten gemeinsamen Vorlaufleitung und rücklaufseitig über eine erste rücklaufseitige Abzweigung mit einer ersten gemeinsamen Rücklaufleitung verbunden sind, wobei die erste gemeinsame Vorlaufleitung, die Erdkollektoren einschließlich ihrer Verbindungen mit den ersten vorlaufseitigen Abzweigungen und den ersten rücklaufseitigen Abzweigungen und die erste gemeinsame Rücklaufleitung so ausgebildet sind, dass für jeden Erdkollektor die Summe der Druckverluste für die Durchströmung (i.) der ersten gemeinsamen Vorlaufleitung von ihrem vorlaufseitigen Ende bis zu der ersten vorlaufseitigen Abzweigung zu diesem Erdkollektor, (ii.) dieses Erdkollektors und seiner Verbindungen mit den ersten vorlaufseitigen Abzweigungen und den ersten rücklaufseitigen Abzweigungen und (iii.) der ersten gemeinsamen Rücklaufleitung ab der ersten rücklaufseitigen Abzweigung zu diesem Erdkollektor bis zu ihrem rücklaufseitigen Ende gleich groß ist.

## Beschreibung

Die Erfindung betrifft eine Anordnung von Erdkollektoren für Großanlagen in der kalten Nahwärmenutzung.

Bei der Erdwärmeheizung mithilfe von Erdkollektoren (Erdwärmekollektoren) wird dem Erdreich mittels der Erdkollektoren Wärme entzogen, die von einer Wärmepumpe auf ein höheres Temperaturniveau angehoben wird, sodass sie für die Beheizung eines Gebäudes oder einer anderen Einrichtung verwendet werden kann. Erdkollektoren entnehmen dem Untergrund bis in ca. 5 m Tiefe saisonal gespeicherte Energie (VDI 4640 Blatt 2, 2015). Die aus der Umgebung, insbesondere von Regen, Außenluft und Sonne, ins Erdreich eingebrachte Wärme geht in den Erdkollektoren auf den Wärmeträger über und wird von dem Wärmeträger zur Wärmepumpe transportiert. Alternativ kann die oberflächennahe Geothermie auch zum passiven Kühlen oder mit einer reversiblen Wärmepumpe sogar zum aktiven Kühlen verwendet werden. Erdkollektoren bestehen im Wesentlichen aus einem Rohr mit einem meistens schlaufenförmigen, spiralförmigen oder mäanderförmigen Verlauf, das im Regelfall in einer Tiefe von 1 bis 1,5 m unter der Erdoberfläche, in Sonderfällen auch noch tiefer, verlegt ist. In diesen Tiefen liegen Anfang Februar bei ungestörten Bodenverhältnissen Temperaturen von 2 bis 5 °C und im August von 12 bis 15 °C vor. Als Wärmeträger wird ein Gemisch aus Wasser und Frostschutzmittel (z. B. Glykol) verwendet, um im Winter ein Einfrieren im Rohr zu vermeiden, gleichzeitig jedoch die Nutzung der Phasenumwandlungsenthalpie der im Erdreich zur Verfügung stehenden Feuchte zu ermöglichen. Diese Art der Erdwärmeheizung wird auch als "kalte Nahwärmenutzung" bezeichnet, wenn mehrere Gebäude über dieses System aus einer oder mehreren gemeinsamen Kollektoranlage(n) und einem Verteilnetz versorgt werden. Bei Versorgung von nur einem Gebäude handelt es sich um eine konventionelle Geothermie-Nutzung.

Für die Erdwärmeheizung mehrerer Wohneinheiten in Ein-, Zwei-, Reihen- und Mehrfamilienhäusern oder ganzen Siedlungen werden entsprechend große Anordnungen von Erdkollektoren benötigt. Wegen des guten Wärmeüberganges werden Anordnungen von Erdkollektoren für Großanlagen bevorzugt außerhalb der Siedlungen in Freiflächen angeordnet, bei denen keine Gefahr einer späteren Umnutzung besteht. Beispielhaft seien hierfür Ackerflächen und Streuobstwiesen genannt. Derartige Anordnungen werden auch als "Energiefelder" bezeichnet. Wenn die Energiefelder mehrere unterschiedlich ausgebildete Erdkollektoren umfassen, beispielsweise Erdkollektoren mit Rohren unterschiedlicher Länge oder unterschiedlichen Durchmessers, oder mehrere Gruppen mit einer unterschiedlichen Anzahl von Erdkollektoren, werden diese über Verteiler zusammengeschaltet. Die Verteiler dienen dazu, unterschiedlich ausgebildete Erdkollektoren oder Gruppen von Erdkollektoren hydraulisch abzugleichen, sodass die jeweiligen Erdkollektoren gleichmäßig durchströmt werden und dem Erdreich gleichmäßig Energie entziehen.

Für den Einsatz auf Energiefeldern gibt es Verteilerschächte aus Kunststoff, die Absperr- und Regelarmaturen, durch die Schachtwand nach außen geführte Anschlüsse und am oberen Ende eine Schachtabdeckung aufweisen, die etwa bündig mit der Erdoberfläche abschließt. Verteilerschächte sind kostspielig, stören bei der landwirtschaftlichen Bearbeitung von beispielsweise Feldern und werden leicht durch landwirtschaftliche Maschinen beschädigt.

Die EP 2 957 841 A1 beschreibt einen Erdsonden-Wärmekreislauf, bei dem mehrere Erdsonden verwendet werden, um die dem Boden entziehbare Wärmeleistung zu erhöhen. Die Erdsonden sollen parallel oder in Reihe betrieben werden, wobei die Reihenschaltung wegen der längeren Verweildauer der Flüssigkeit in den Erdsonden als thermisch vorteilhaft angesehen wird. Der negative Einfluss auf den damit steigenden Druckverlust soll an dieser Stelle nicht diskutiert werden. Die Erdsonden sind in senkrechte Bohrlöcher und bis zu 100 m tief im Erdreich angeordnet. Oberhalb der Erdoberfläche sind die oberen Enden der Erdsonden über Leitungen mit einer Pumpe und einem Wärmetauscher verbunden.

Davon ausgehend liegt der Erfindung die Aufgabe zugrunde, eine Anordnung von Erdkollektoren für Großanlagen in der kalten Nahwärmenutzung zur Verfügung zu stellen, die ohne Verteiler oder mit einer deutlich reduzierten Anzahl von Verteilern auskommt.

Die Aufgabe wird durch eine Anordnung von Erdkollektoren gemäß Anspruch 1 gelöst. Vorteilhafte Ausführungsarten der Erfindung sind in Unteransprüchen angegeben.

Die erfindungsgemäße Anordnung von Erdkollektoren für Großanlagen in der kalten Nahwärmenutzung umfasst eine erste Gruppe aus Erdkollektoren, die jeweils vorlaufseitig über eine erste vorlaufseitige Abzweigung mit einer ersten gemeinsamen Vorlaufleitung und rücklaufseitig über eine erste rücklaufseitige Abzweigung mit einer ersten gemeinsamen Rücklaufleitung verbunden sind. Hierbei sind die erste gemeinsame Vorlaufleitung, die Erdkollektoren einschließlich ihrer Verbindungen mit den ersten vorlaufseitigen Abzweigungen und den ersten rücklaufseitigen Abzweigungen und die erste gemeinsame Rücklaufleitung so ausgebildet, dass für jeden Erdkollektor die Summe der Druckverluste für die Durchströmung (i.) der ersten gemeinsamen Vorlaufleitung von ihrem vorlaufseitigen Ende bis zu der ersten vorlaufseitigen Abzweigung zu diesem Erdkollektor, (ii.) für die Durchströmung dieses Erdkollektors und seiner Verbindungen mit der ersten vorlaufseitigen Abzweigung und der ersten rücklaufseitigen Abzweigung und (iii.) für die Durchströmung der ersten gemeinsamen Rücklaufleitung ab der ersten rücklaufseitigen Abzweigung zu diesem Erdkollektor bis zu ihrem rücklaufseitigen Ende gleich groß ist.

Die erfindungsgemäße Anordnung verwendet Erdkollektoren, die einschließlich ihrer Verbindungen mit der ersten vorlaufseitigen Abzweigung und der ersten rücklaufseitigen Abzweigung den gleichen Druckverlust aufweisen. Gemäß einer bevorzugten Ausführungsart handelt es sich dabei um Erdkollektoren, die einschließlich ihrer Verbindungen mit den ersten vorlaufseitigen Abzweigungen und den ersten rücklaufseitigen Abzweigungen gleich ausgebildet sind. Gemäß einer weiteren Ausführungsart handelt es sich dabei um Erdkollektoren, deren Rohre übereinstimmende Längen und Innendurchmesser aufweisen, und um Verbindungen (z.B. Rohrverbinder oder Schlauchverbinder und ggfs. Verbindungsleitungen), die übereinstimmende Innendurchmesser und Längen aufweisen. Ferner verwendet die Erfindung eine erste gemeinsame Vorlaufleitung und eine erste gemeinsame Rücklaufleitung. Jeder Erdkollektor hat einen vorlaufseitigen und einen rücklaufseitigen Anschluss. Der vorlaufseitige Anschluss ist über eine erste vorlaufseitige Abzweigung mit der ersten gemeinsamen Vorlaufleitung verbunden. Der rücklaufseitige Anschluss ist über eine erste rücklaufseitige Abzweigung mit der ersten gemeinsamen Rücklaufleitung verbunden. Ferner ist die Anordnung so ausgebildet, dass die Summen der Druckverluste in den Abschnitten der ersten gemeinsamen Vorlaufleitung und der ersten gemeinsamen Rücklaufleitung, die der Wärmeträger vor und nach dem Durchströmen eines beliebigen Erdkollektors durchströmt, gleich groß sind. Da die Erdkollektoren einschließlich ihrer Verbindungen mit den ersten vorlaufseitigen Abzweigungen und den ersten rücklaufseitigen Abzweigungen die gleichen Druckverluste haben und die Druckverluste der ersten gemeinsamen Vorlauf- und Rücklaufleitungen gleich groß sind, stimmen die Druckverluste für jeden Erdkollektor überein. Hierdurch wird erreicht, dass sämtliche Erdkollektoren gleichmäßig durchströmt werden und dem Erdreich gleichmäßig Energie entziehen. Ein hydraulischer Abgleich der Erdkollektoren ist somit nicht erforderlich und die Anordnung kommt ohne Verteiler aus. Im Heizungsbau ist unter der Bezeichnung "Tichelmann-System (Tichelmannsche Rohrführung)" eine ähnliche Anordnung bekannt, bei der Rohre vom Heizkessel oder von der Solaranlage zu den Heizkörpern und zum Heizkessel oder zur Solaranlage zurück so geführt werden, dass die Summe der Längen von Vorlaufleitung und Rücklaufleitung bei jedem Heizkörper etwa gleich sind. Beim Tichelmann-System verhindern an unterschiedliche Raumgrößen angepasste Heizkörper und die Beheizung mehrerer Etagen einen idealen hydraulischen Abgleich. Bei der Anordnung von Erdkollektoren in Energiefeldern hat dieses System bislang keine Anwendung gefunden. Gerade hier ist jedoch ein idealer hydraulischer Abgleich möglich, da die Druckverluste der Erdkollektoren einschließlich ihrer Verbindungen mit den ersten vorlaufseitigen Abzweigungen und den ersten rücklaufseitigen Abzweigungen gleich ausgebildet werden können.

Gemäß einer Ausführungsart der Erfindung weist die Anordnung keine Verteilerschächte auf. Gemäß einer weiteren Ausführungsart ist nur ein das erste vorlaufseitige Ende aufweisender Abschnitt der ersten gemeinsamen Vorlaufleitung und nur ein das rücklaufseitige Ende aufweisender Abschnitt der ersten gemeinsamen Rücklaufleitung aus dem Erdreich herausgeführt, beispielsweise aus der Erdoberfläche heraus oder unterhalb der Erdoberfläche in ein Gebäude hinein. Der übrige Teil der Anordnung ist im Erdreich angeordnet, vorzugsweise mindestens 0,5 m unterhalb der Erdoberfläche.

Gemäß einer Ausführungsart der Erfindung weisen die ersten Vorlauf- und Rücklaufleitungen gleiche Innenquerschnitte auf und ist die Summe der Längen der ersten gemeinsamen Vorlaufleitung von ihrem vorlaufseitigen (dem Auslass für den Wärmeträger der Wärmepumpe zugewandten) Ende bis zu der ersten vorlaufseitigen Abzweigung zu einem bestimmten Erdkollektor und der ersten gemeinsamen Rücklaufleitung ab der ersten rücklaufseitigen Abzweigung zu diesem Erdkollektor bis zu ihrem rücklaufseitigen (dem Einlass für den Wärmeträger der Wärmepumpe zugewandten) Ende gleich lang. Hierdurch wird erreicht, dass jedes Flüssigkeitsteilchen des Wärmeträgers, das einen beliebigen Erdkollektor durchströmt, beim Durchströmen der ersten gemeinsamen Vorlaufleitung und der ersten gemeinsamen Rücklaufleitung insgesamt denselben Bedingungen unterworfen wird. Wenn beispielsweise der Erdkollektor vorlaufseitig mit der dem vorlaufseitigen Ende der ersten gemeinsamen Vorlaufleitung nächstliegenden ersten vorlaufseitigen Abzweigung und rücklaufseitig mit der am weitesten von dem rücklaufseitigen Ende der ersten gemeinsamen Rücklaufleitung entfernten ersten rücklaufseitigen Abzweigung verbunden ist, strömt der Wärmeträger in der Vorlaufleitung bis zu der ersten vorlaufseitigen Abzweigung vergleichsweise schnell und hinter der ersten rücklaufseitigen Abzweigung in der ersten gemeinsamen Rücklaufleitung vergleichsweise langsam und von Abzweigung zu Abzweigung schneller. In der Summe legt jedes Flüssigkeitsteilchen gleich lange Strecken mit gleichen Geschwindigkeiten zurück, unabhängig davon, durch welchen Erdkollektor es hindurchströmt.

Da die gemeinsamen Vorlauf- und Rücklaufleitungen gleiche erste Innenquerschnitte aufweisen und die Erdkollektoren einschließlich ihrer Verbindungen mit den ersten vorlaufseitigen Abzweigungen und den ersten rücklaufseitigen Abzweigungen, stimmen die Druckverluste für jeden Erdkollektor überein, sodass sämtliche Erdkollektoren gleichmäßig durchströmt werden. Gemäß einer bevorzugten Ausführungsart weisen die Vorlaufleitungen und die Rücklaufleitungen einen Kreisquerschnitt mit übereinstimmenden ersten Innendurchmessern (Nennwerten) auf. Abweichend vom konventionellen Tichelmann-System erfolgt jedoch keine Anpassung der Dimension der Vor- und Rücklaufleitung innerhalb eines Tichelmannkreises, sondern die Innenquerschnitte der Vor- und Rücklaufleitungen bleiben gleich. Dies ist den typischen bodentechnischen Gegebenheiten und besonderen Herausforderungen bei der Erdverlegung von Rohrleitungen geschuldet.

Gemäß einer weiteren Ausführungsart ist der Innenquerschnitt der ersten gemeinsamen Vorlaufleitung und der ersten gemeinsamen Rücklaufleitung größer als der Innenquerschnitt der Rohre der Erdkollektoren.

Gemäß einer weiteren Ausführungsart weisen die Rohre der Erdkollektoren einen Kreisquerschnitt mit übereinstimmenden Innendurchmessern auf.

Gemäß einer weiteren Ausführungsart sind die erste Vorlaufleitung und die erste Rücklaufleitung so ausgebildet, dass für jeden Erdkollektor die Druckverluste des in Strömungsrichtung vor dem Erdkollektor angeordneten Teils der ersten gemeinsamen Vorlaufleitung und des in Strömungsrichtung hinter demselben Erdkollektor angeordneten Teils der ersten gemeinsamen Rücklaufleitung wesentlich geringer als der Druckverlust desselben Erdkollektors sind. Unter "wesentlich geringer" wird ein Druckverlust von maximal 50 %, vorzugsweise von maximal 40 %, vorzugsweise von maximal 30 %, vorzugsweise von maximal 20 %, vorzugsweise von maximal 10 %, vorzugsweise von maximal 5 % des Druckverlustes des durchströmten Erdkollektors verstanden. Hierdurch wird erreicht, dass im Wesentlichen unabhängig von der Bemessung der Vorlaufleitung und der Rücklaufleitung die Druckverluste für jeden Erdkollektor übereinstimmen und sämtliche Erdkollektoren gleichmäßig durchströmt werden.

Hierfür hat gemäß einer weiteren Ausführungsart bei Erdkollektoren, die ein Rohr mit einem Innendurchmesser von 20,4 mm oder von 16 mm oder kleiner oder größer aufweisen, die erste gemeinsame Vorlaufleitung und die erste gemeinsame Rücklaufleitung einen Innendurchmesser von 40,8 mm oder weniger, oder mehr, wenn die erste Gruppe bis zu zwölf Erdkollektoren umfasst, und von 51,4 mm oder weniger oder mehr, wenn die erste Gruppe 13 bis 16 Erdkollektoren umfasst. Bei diesen Bemessungen sind die Druckverluste in der ersten gemeinsamen Vorlaufleitung und in der ersten gemeinsamen Rücklaufleitung wesentlich geringer als die Druckverluste in dem jeweiligen Erdkollektor. Infolgedessen kommt es für den hydraulischen Abgleich vor allem auf die einheitliche Ausführung der Erdkollektoren an. Hingegen kommt es nicht darauf an, dass die Summen der Längen von dem vorlaufseitigen Ende bis zur vorlaufseitigen Abzweigung der ersten gemeinsamen Vorlaufleitung zu einem beliebigen Erdkollektor und der rücklaufseitigen Abzweigung zu diesem Erdkollektor bis zu dem rücklaufseitigen Ende der Rücklaufleitung gleich groß sind. Hierdurch wird der Verlegeaufwand reduziert.

Bei einer weiteren Ausführungsart der Erfindung umfasst eine zweite Gruppe aus mehreren ersten Gruppen mit gleichen Drucklusten, die jeweils vorlaufseitig über eine zweite vorlaufseitige Abzweigung mit einer zweiten gemeinsamen Vorlaufleitung und rücklaufseitig über eine zweite rücklaufseitige Abzweigung mit einer zweiten gemeinsamen Rücklaufleitung verbunden sind, wobei die zweite gemeinsame Vorlaufleitung und die zweite gemeinsame Rücklaufleitung so ausgebildet sind, dass für jede erste Gruppe die Summe der Druckverluste für die Durchströmung der zweiten gemeinsamen Vorlaufleitung von ihrem vorlaufseitigen Ende bis zur zweiten vorlaufseitigen Abzweigung zu dieser ersten Gruppe und der ersten gemeinsamen Rücklaufleitung ab der zweiten rücklaufseitigen Abzweigung zu dieser ersten Gruppe bis zu ihrem rücklaufseitigen Ende gleich groß sind. Gemäß einer weiteren Ausführungsart sind die ersten Gruppen mit gleichen Druckverlusten gleich ausgebildete erste Gruppen. Mit gleich ausgebildeten ersten Gruppen werden erste Gruppen bezeichnet, welche hinsichtlich der in Anspruch 1 angegebenen Eigenschaften, sowie der Anzahl der Erdkollektoren, übereinstimmen. Mit dem vorlaufseitigen Ende der zweiten gemeinsamen Vorlaufleitung ist das dem Auslass für den Wärmeträger der Wärmepumpe zugewandte Ende dieser Vorlaufleitung bezeichnet und mit dem rücklaufseitigen Ende der zweiten gemeinsamen Rücklaufleitung ist das dem Einlass für den Wärmeträger der Wärmepumpe zugewandte Ende dieser Rücklaufleitung bezeichnet. Bei dieser Ausführungsart sind mehrere erste Gruppen gemäß Anspruch 1 zu einer zweiten Gruppe zusammengeschaltet. Die Druckverluste bei der Durchströmung jeder ersten Gruppe einschließlich der zugehörigen Abschnitte der zweiten gemeinsamen Vorlaufleitung und der zweiten gemeinsamen Rücklaufleitung sind gleich groß. Infolgedessen werden die Erdkollektoren sämtlicher ersten Gruppen gleichmäßig von dem Wärmeträger durchströmt und dem Erdreich gleichmäßig Energie entzogen, ohne dass ein hydraulischer Abgleich mittels Verteilern erforderlich ist. Diese Ausführungsart ermöglicht eine flexible Verteilung der Erdkollektoren über größere Energiefelder.

Gemäß einer weiteren Ausführungsart weist die Anordnung keine Verteilerschächte auf. Gemäß einer weiteren Ausführungsart ist nur ein das vorlaufseitige Ende aufweisender Abschnitt der zweiten gemeinsamen Vorlaufleitung und nur ein das rücklaufseitige Ende aufweisender Abschnitt der zweiten gemeinsamen Rücklaufleitung aus dem Erdreich herausgeführt, beispielsweise aus der Erdoberfläche heraus oder unterhalb der Erdoberfläche in ein Gebäude hinein. Der übrige Teil der Anordnung ist im Erdreich angeordnet, vorzugsweise mindestens 0,5 m unterhalb der Erdoberfläche.

Gemäß einer weiteren Ausführungsart weisen die zweite gemeinsame Vorlaufleitung und die zweite gemeinsame Rücklaufleitung gleiche zweite Innenquerschnitte (gleiche zweite Innendurchmesser bei Kreisquerschnitten) auf und ist für jede erste Gruppe die Summe der Längen der zweiten gemeinsamen Vorlaufleitung von ihrem vorlaufseitigen Ende bis zur zweiten vorlaufseitigen Abzweigung zu dieser Gruppe und der ersten gemeinsamen Rücklaufleitung ab der zweiten rücklaufseitigen Abzweigung zu dieser ersten Gruppe bis zu ihrem rücklaufseitigen Ende gleich groß. Hierdurch wird gewährleistet, dass die Druckverluste immer gleich groß sind, unabhängig davon, durch welche erste Gruppe der Wärmeträger hindurchströmt.

Gemäß einer weiteren Ausführungsart ist der Innenquerschnitt der zweiten gemeinsamen Vorlaufleitung und der zweiten gemeinsamen Rücklaufleitung größer als der Innenquerschnitt der ersten gemeinsamen Vorlaufleitung und der zweiten gemeinsamen Vorlaufleitung.

Gemäß einer weiteren Ausführungsart sind die zweite gemeinsame Vorlaufleitung und die zweite gemeinsame Rücklaufleitung so ausgebildet, dass die Druckverluste beim Durchströmen eines in Strömungsrichtung vor einer beliebigen ersten Gruppe angeordneten Teils der weiteren gemeinsamen Vorlaufleitung und eines in Strömungsrichtung hinter derselben ersten Gruppe angeordneten Teils der zweiten gemeinsamen Rücklaufleitung wesentlich geringer als der Strömungsverlust beim Durchströmen derselben ersten Gruppe ist. Unter "wesentlich geringer" wird ein Druckverlust von maximal 20 %, vorzugsweise von maximal 40 %, vorzugsweise von maximal 30 %, vorzugsweise von maximal 20 %, vorzugsweise von maximal 10 %, vorzugsweise von maximal 5 % des Druckverlustes beim Durchströmen der ersten Gruppe verstanden. Hierdurch wird erreicht, dass die Druckverluste für das Durchströmen einer beliebigen ersten Gruppe und der hierfür durchströmten Teile der zweiten gemeinsamen Vorlaufleitung und der zweiten gemeinsamen Rücklaufleitung maßgeblich vom Druckverlust für das Durchströmen der ersten Gruppe bestimmt wird. Da die Druckverluste für das Durchströmen der ersten Gruppen gleich groß sind, werden diese Gruppen gleichmäßig durchströmt.

Gemäß einer weiteren Ausführungsart beträgt bei ersten Gruppen, die maximal 16 Erdkollektoren umfassen, die ein Rohr mit maximal 20,4 mm oder weniger oder mehr Innendurchmesser aufweisen, wobei die erste gemeinsame Vorlaufleitung und die erste gemeinsame Rücklaufleitung einen Innendurchmesser von maximal 51,4 mm oder weniger oder mehr aufweisen. Der Innendurchmesser der zweiten gemeinsamen Vorlaufleitung und der zweiten gemeinsamen Rücklaufleitung 115 mm oder weniger oder mehr, wenn die zweite Gruppe bis zu zehn erste Gruppen umfasst. Bei dieser Ausführungsart sind die Druckverluste in den zweiten gemeinsamen Vorlaufleitungen und den zweiten gemeinsamen Rücklaufleitungen wesentlich geringer als in den ersten Gruppen.

Die Anordnung kann auf beliebige übergeordnete Gruppen erweitert werden, um größere Energiefelder zu verwirklichen. Gemäß einer weiteren Ausführungsart umfasst eine n-te Gruppe aus mehreren (n-1)-ten Gruppen mit gleichem Druckverlust, die jeweils vorlaufseitig über eine n-te vorlaufseitige Abzweigung mit einer n-ten gemeinsamen Vorlaufleitung und rücklaufseitig über eine n-te rücklaufseitige Abzweigung mit einer n-ten gemeinsamen Rücklaufleitung verbunden sind, wobei die n-te Vorlaufleitung und die n-te Rücklaufleitung so ausgebildet sind, dass für jede (n-1)-te Gruppe die Summe der Druckverluste für die Durchströmung der n-ten gemeinsamen Vorlaufleitung von ihrem vorlaufseitigen Ende bis zur n-ten vorlaufseitigen Abzweigung zu dieser (n-1)-ten Gruppe und der n-ten gemeinsamen Rücklaufleitung ab der n-ten rücklaufseitigen Abzweigung zu dieser (n-1)-ten Gruppe bis zu ihrem rücklaufseitigen Ende gleich groß ist. Bei dieser Ausführungsart ist n eine ganze Zahl, die gleich oder größer als 2 ist. Bei dieser Ausführungsart ist sichergestellt, dass der Druckverlust für das Durchströmen jeder (n-1)-ten Gruppe einschließlich der zugehörigen Abschnitte der n-ten gemeinsamen Vorlaufleitung und der n-ten gemeinsamen Rücklaufleitung gleich groß ist. Infolgedessen werden sämtliche Erdkollektoren gleichmäßig durchströmt und dem Erdreich gleichmäßig Energie entzogen, ohne dass Verteiler erforderlich sind.

Gemäß einer weiteren Ausführungsart weist die Anordnung keine Verteilerschächte auf. Gemäß einer weiteren Ausführungsart ist nur ein das vorlaufseitige Ende aufweisender Abschnitt der n-ten gemeinsamen Vorlaufleitung und nur ein das rücklaufseitige Ende aufweisender Abschnitt der n-ten gemeinsamen Rücklaufleitung aus dem Erdreich herausgeführt, beispielsweise aus der Erdoberfläche oder unterhalb der Erdoberfläche in ein Gebäude hinein. Der übrige Teil der Anordnung ist im Erdreich angeordnet, vorzugsweise mindestens 0,5 m unter der Erdoberfläche.

Gemäß einer weiteren Ausführungsart sind die (n-1)-ten Gruppen gleich ausgebildet. Die gleich ausgebildeten (n-1)-ten Gruppen weisen gleiche Anzahlen Erdkollektoren, gleiche Erdkollektoren, gleiche Verbindungen der Erdkollektoren mit den ersten vorlaufseitigen Abzweigungen, gleiche Verbindungen der Erdkollektoren mit den ersten rücklaufseitigen Abzweigungen, gleiche erste Vorlaufleitungen und gleiche erste Rücklaufleitungen auf.

Gemäß einer weiteren Ausführungsart weisen die n-te gemeinsame Vorlaufleitung und die n-te gemeinsame Rücklaufleitung gleiche n-te Innenquerschnitte (gleiche n-te Innendurchmesser bei Kreisquerschnitten) auf und sind für jede (n-1)-te Gruppe die Summe der Längen der n-ten gemeinsamen Vorlaufleitung von ihrem vorlaufseitigen Ende bis zur n-ten vorlaufseitigen Abzweigung zu dieser Gruppe und der n-ten gemeinsamen Rücklaufleitung ab der n-ten rücklaufseitigen Abzweigung zu dieser (n-1)-ten Gruppe bis zu ihrem rücklaufseitigen Ende gleich groß.

Gemäß einer weiteren Ausführungsart ist der Innenquerschnitt der n-ten gemeinsamen Vorlaufleitung und der n-ten gemeinsamen Rücklaufleitung größer als der Innenquerschnitt der (n -1)-ten gemeinsamen Vorlaufleitung und der (n -1)-ten gemeinsamen Rücklaufleitung.

Gemäß einer weiteren Ausführungsart sind die n-te gemeinsame Vorlaufleitung und die n-te gemeinsame Rücklaufleitung so ausgebildet, dass die für das Durchströmen einer beliebigen (n-1)-ten Gruppe die Summe der Druckverluste in dem derselben Gruppe in Strömungsrichtung vorgeordneten Teil der n-ten Vorlaufleitung und dem derselben Gruppe nachgeordneten Teil der n- ten gemeinsamen Rücklaufleitung wesentlich geringer sind als der Druckverlust beim Durchströmen der (n-1)-ten Gruppe ist. Unter "wesentlich geringer" wird ein Druckverlust von maximal 50 %, vorzugsweise von maximal 40 %, vorzugsweise von maximal 30 %, vorzugsweise von maximal 20 %, vorzugsweise von maximal 10 %, vorzugsweise von maximal 5 % des Druckverlustes beim Durchströmen der (n-1)-ten Gruppe verstanden. Hierdurch wird erreicht, dass die Druckverluste für das Durchströmen einer beliebigen (n-1)-ten Gruppe und der hierfür durchströmten Teile der n-ten gemeinsamen Vorlaufleitung und der n-ten gemeinsamen Rücklaufleitung maßgeblich vom Druckverlust für das Durchströmen der (n-1)-ten Gruppe bestimmt wird. Da die Druckverluste für das Durchströmen der (n-1)-ten Gruppen gleich groß sind, werden diese Gruppen gleichmäßig durchströmt.

Gemäß einer bevorzugten Ausführungsart sind sämtliche Erdkollektoren der Anordnung gleich ausgebildet, sodass eine ausschließlich diese Kollektoren umfassende Gruppe ohne Verteiler auskommt. Gemäß einer anderen Ausführungsart ist neben gleich ausgebildeten Erdkollektoren mindestens ein unterschiedlich ausgebildeter Erdkollektor vorhanden, sodass eine diese Erdkollektoren umfassende Gruppe mindestens einen Verteiler umfasst.

Gemäß einer weiteren Ausführungsart sind die (n-1)-ten Gruppen gleich ausgebildet, sodass eine ausschließlich diese (n-1)-te Gruppen umfassende n-te Gruppe ohne Verteiler auskommt. Gemäß einer anderen Ausführungsart umfasst die n-te Gruppe neben gleich ausgebildeten (n-1)-ten Gruppen mindestens eine ungleich ausgebildete (n-1)-te Gruppe. Diese kann über Verteiler mit den übrigen (n-1)-ten Gruppen zusammengeschaltet werden.

Gemäß einer weiteren Ausführungsart weisen die Erdkollektoren jeweils ein in einer Ebene schlaufenförmig, spiralförmig oder mäanderförmig verlaufendes Rohr auf. Gemäß einer weiteren Ausführungsart ist das Rohr auf mindestens einer Tragstruktur, vorzugsweise auf Latten oder auf einem Lattengerüst, angeordnet. Gemäß einer weiteren Ausführungsart weist das spiralförmig verlaufende Rohr in einem mittleren Abschnitt des Erdkollektors geradlinig und parallel zueinander verlaufende erste Abschnitte und an den Enden des Erdkollektors gebogen und parallel zueinander verlaufende zweite Abschnitte auf.

Gemäß einer weiteren Ausführungsart sind die geradlinigen ersten Abschnitte der Rohre auf mindestens einer senkrecht zu diesen Abschnitten der Rohre erstreckenden ersten Latte fixiert und die gebogenen zweiten Abschnitte auf in Richtung der geradlinigen Abschnitte verlaufenden zweiten Latten fixiert.

Gemäß einer bevorzugten Ausführungsart ist das Rohr ein Rohr aus Kunststoff.

Gemäß einer weiteren Ausführungsart ist das Rohr aus Metall-Kunststoff-Verbundrohr oder aus Metall.

Gemäß einer weiteren Ausführungsart bestehen die Latten aus Holz oder aus Kunststoff oder aus Metall oder aus Verbundmaterial. Gemäß einer weiteren Ausführungsart ist das Rohr über Krampen, Schellen oder andere Befestigungsmittel an den Latten befestigt.

Gemäß einer weiteren Ausführungsart ist die Ausdehnung der Erdkollektoren in Richtung der geradlinigen Abschnitte größer als in der dazu senkrechten Richtung. Gemäß einer weiteren Ausführungsart ist die Ausdehnung der Erdkollektoren in Richtung der geradlinigen Abschnitte (Längsrichtung) maximal 25 m und/oder in Richtung senkrecht dazu (Querrichtung) maximal 5 m. Die Ausdehnung der Erdkollektoren in den besagten Richtungen beträgt z. B. 10 m x 2 m oder 5 m x 2 m. Diese Bemessung der Erdkollektoren ist vorteilhaft für den Transport auf einem Lkw. Dies ist vorteilhaft für die Herstellung der Erdkollektoren unter günstigen Bedingungen in einer dafür ausgestatteten Werkstatt oder Fabrik und das Verbringen der fertigen Erdkollektoren zum Ort der Verlegung mittels Lkw.

Gemäß einer weiteren Ausführungsart haben die Erdkollektoren mit einer Größe von 2 × 10 m ein Rohr 25 × 2,3 mm von 106 m Länge. Gemäß einer anderen Ausführungsart haben die Erdkollektoren der Größe 2 × 5 m ein Rohr 20 × 2,0 mm mit 72 m Länge.

Gemäß einer weiteren Ausführungsart ist der Erdkollektor ausgebildet und/oder im Erdreich verlegt, wie in einem der folgenden Dokumente beschrieben: EP 244 017 A1, DE 10 2009 005 540 B3, EP 2 241 850 B1, EP 2 572 145 B1, DE 10 2011 111 704 B3. In dieser Hinsicht wird Bezug genommen auf die vorstehenden Dokumente, deren Inhalt hiermit in diese Anmeldung aufgenommen wird.

Gemäß einer weiteren Ausführungsart ist mindestens einer der Erdkollektoren aus mehreren kleineren Kollektorelementen zusammengesetzt, die zusammengesetzt einem einzigen Erdkollektor entsprechen. Beispielsweise ist ein Erdkollektor mit einer Größe von 2 × 10 m aus zwei Kollektorelementen der Größe 2 × 5 m zusammengesetzt, wobei für die Kollektorelemente dasselbe Rohr verwendet wird, wie für einen einzigen Erdkollektor, den sie ersetzen (z. B. 25 × 2,3 mm).

Gemäß einer weiteren Ausführungsart umfasst die Anordnung horizontal verlegte Erdkollektoren. Die horizontale Anordnung der Erdkollektoren wird vorzugsweise bei Verlegung in nicht standfesten Böden verwendet.

Gemäß einer weiteren Ausführungsart umfasst die Anordnung vertikal verlegte Erdkollektormodule. Hierdurch kann der Erdaushub für das Verlegen der Erdkollektoren erheblich verringert werden. Insbesondere in standfesten Böden ist eine vertikale Verlegung der Erdkollektoren möglich.

Gemäß einer weiteren Ausführungsart sind die Erdkollektoren in mehreren Lagen übereinander horizontal oder vertikal verlegt. Hierdurch kann der Aufwand für das Verlegen einer bestimmten Anzahl Erdkollektoren verringert werden.

Gemäß einer weiteren Ausführungsart umfasst die Anordnung eine erste Gruppe aus mehreren in einer bestimmten Richtung hintereinander angeordneten Erdkollektoren und in derselben Richtung verlegten, an das vorlaufseitige Ende und das rücklaufseitige Ende angrenzenden Abschnitten der ersten gemeinsamen Vorlaufleitung und der ersten gemeinsamen Rücklaufleitung.

Gemäß einer weiteren Ausführungsart sind die Erdkollektoren der ersten Gruppe in ihrer Querrichtung hintereinander angeordnet oder in ihrer Längsrichtung hintereinander angeordnet.

Gemäß einer weiteren Ausführungsart umfasst die Anordnung eine zweite Gruppe aus mehreren, in einer bestimmten horizontalen Richtung hintereinander angeordneten, ersten Gruppen und in derselben Richtung verlegten, an das vorlaufseitige Ende und das rücklaufseitige Ende angrenzenden Abschnitten der zweiten gemeinsamen Vorlaufleitung und der zweiten gemeinsamen Rücklaufleitung.

Gemäß einer weiteren Ausführungsart umfasst die Anordnung eine n-te Gruppe aus mehreren in einer bestimmten horizontalen Richtung hintereinander angeordneten (n-1)-ten Gruppen und in derselben Richtung verlegten, an das vorlaufseitige Ende und das rücklaufseitige Ende angeordneten Abschnitten der n-ten gemeinsamen Vorlaufleitungen und n-ten gemeinsamen Rücklaufleitungen. Bei dieser Ausführungsart ist n eine ganze Zahl, die gleich oder größer als 2 ist.

Gemäß einer weiteren Ausführungsart verlaufen die n-ten gemeinsamen Vorlaufleitungen und n-ten gemeinsamen Rücklaufleitungen senkrecht zu den (n-1)-ten gemeinsamen Vorlaufleitungen und (n -1)-ten gemeinsamen Rücklaufleitungen. Dies begünstigt eine besonders platzsparende Anordnung mit kurzen Leitungswegen.

Gemäß einer weiteren Ausführungsart sind die Erdkollektoren unter einem Feld (z. B. einem Acker) und/oder unter einer Grünfläche (z. B. einem Park, Streuobstwiese, Fußballplatz usw.) und/oder unter einem Gebäude (z. B. einer Lagerhalle) und/oder sonstigen befestigten Flächen (z. B. Parkplätze, Sportplätzen mit Hartplatzoberfläche) und/oder in Wasserflächen (z. B. Teichen, Seen, Bächen und Flüssen) angeordnet.

Gemäß einer weiteren Ausführungsart sind die Erdkollektoren unter einer überbauten Fläche angeordnet.

Bei einer überbauten Fläche handelt es sich um eine Fläche unterhalb eines Gebäudes, Parkplatzes, Sportplatzes mit Hartplatzoberfläche oder Straße, bei der eine natürliche Regeneration durch Wärme aus der Umgebung vollständig oder im Wesentlichen unterbunden ist.

Bei großflächig überbauten Anordnungen mit einer großen Anzahl von Erdkollektoren (Großkollektoranlagen) ist eine Verlegung der Erdkollektoren mit Anschluss jedes einzelnen Kollektors an einen Verteilerschacht technisch nicht realisierbar. Die Erschließung von großen Geothermieflächen unter überbauten Flächen wird durch die erfindungsgemäße Anordnung von Erdkollektoren ermöglicht. Hierdurch können sehr große Flächen für die Erdwärmegewinnung genutzt werden, die auf andere Art und Weise geothermisch nicht erschlossen werden können.

Gemäß einer weiteren Ausführungsart sind die Erdkollektoren teilweise unter einer Freifläche und teilweise unter einer überbauten Fläche angeordnet. Bei einer Freifläche handelt es sich um ein Feld, eine Grünfläche, eine nicht oder im Wesentlichen nicht befestigte oder überbaute Fläche, bei der die natürliche Regeneration durch aus der Umgebung, insbesondere von Regen, Außenluft und Sonne, ins Erdreich eingebrachte Wärme erfolgt.

Ein noch stärkerer Effekt stellt sich ein, wenn nur ein Teil der Erdkollektoren der Anordnung unter einer überbauten Fläche liegen, während der andere Teil der Erdkollektoren unter einer Freifläche liegt, sodass er eine natürliche Regeneration durch Sonne, Regen und Außentemperatur erfährt. Da die Erdkollektoren in der erfindungsgemäßen Anordnung in einem hydraulischen Verbund zueinander stehen, partizipieren die Erdkollektoren unter der überbauten Fläche im Sommer auch von der Regeneration der Erdkollektoren unter der Freifläche durch die Umwelteinflüsse. Im Gegenzug profitiert die Anordnung im Winter von der unter überbauten Flächen, beispielsweise unter einem Gebäude, gespeicherten Wärme, da das Erdreich unter dem Gebäude den äußeren klimatischen Bedingungen nicht in dem Maße ausgesetzt ist, wie die Erdkollektoren unter der Freifläche. Somit sind die zu erwartenden Quelltemperaturen, d.h. die Temperaturen des Erdreichs, in der die Erdkollektoren verlegt sind, bei einer solchen Anordnung im Winter höher als bei einer Verlegung ausschließlich unter einer Freifläche zu erwarten. Gleichzeitig wird für die Anordnung der Erdkollektoren ein zusätzlicher Bereich unter überbauten Flächen erschlossen, der aufgrund der fehlenden natürlichen Regeneration in aktuellen Richtlinien als nicht nutzbar angesehen wird.

Gemäß einer weiteren Ausführungsart umfasst eine Erdwärmeheizung eine Anordnung von Erdkollektoren gemäß einer der vorbeschriebenen Ausführungsarten, mindestens eine Wärmepumpe und mehrere Wärmeübergabesysteme an die zu klimatisierenden Räume. Gemäß einer weiteren Ausführungsart umfassen die Wärmeübergabesysteme eine oder mehrere der folgenden Einrichtungen: Heizkörper, Flächenheizung und -kühlung (Wand-, Decken- und/oder Fußbodenheizung), Heiz- und/oder Kühlregister von Lüftungsanlagen.

Gemäß einer weiteren Ausführungsart sind die Heiz- und Kühleinrichtungen in einem oder in mehreren Gebäuden angeordnet.

Gemäß einer weiteren Ausführungsart umfasst die Erdwärmeheizung eine Umschalteinrichtung, welche den Wärmeträger an der Wärmepumpe vorbei direkt in die Heizeinrichtungen einspeist, um das Gebäude bei erhöhten Außentemperaturen mittels des Wärmeträgers zu kühlen. Die erhöhten Außentemperaturen sind vorzugsweise oberhalb der Behaglichkeitstemperatur (21° bis 23°C) angesiedelt. Bei einer Temperatur des Wärmeträgers von regelmäßig 12 bis 15° im August kann der Wärmeträger zum Kühlen des Gebäudes verwendet werden. Hierzu sind vorzugsweise die Wärmeübergabesysteme Fußbodenheizungen und/oder andere Flächenheiz- oder Kühlsysteme. Gemäß einer weiteren Ausführungsart umfasst diese auch Heizregister in raumlufttechnischen Anlagen die zum kühlen genutzt werden. Gemäß einer weiteren Ausführungsart erfolgt die Kühlung über ein gesondertes Kühlregister.

Die Erfindung wird nachfolgend der anliegenden Zeichnungen von Ausführungsbeispielen näher erläutert. In den Zeichnungen zeigen:
- Fig. 1: einen Erdkollektor in der Draufsicht;
- Fig. 2: eine erste Gruppe aus mehreren Erdkollektoren gemäß Fig. 1 in der Draufsicht;
- Fig. 3: eine zweite Gruppe umfassend mehrere erste Gruppen in der Draufsicht;
- Fig. 4: eine dritte Gruppe umfassend mehrere zweite Gruppen in der Draufsicht;
- Fig. 5: zwei horizontal übereinander verlegte Erdkollektoren in einer Perspektivansicht;
- Fig. 6: eine Vielzahl in zwei Lagen übereinander horizontal verlegter Erdkollektoren in einer Perspektivansicht;
- Fig. 7: eine Vielzahl vertikal verlegter Erdkollektoren in einer Perspektivansicht;
- Fig. 8: eine Vielzahl in ersten Gruppen und einer übergeordneten zweiten Gruppe vertikal verlegter Erdkollektoren in der Draufsicht,
- Fig. 9: eine Anordnung von Erdkollektoren teilweise unter einer überbauten Fläche und teilweise unter einer Freifläche in der Draufsicht;
- Fig. 10: eine weitere Anordnung von Erdkollektoren teilweise unter einer überbauten Fläche und teilweise unter einer Freifläche in der Draufsicht;
- Fig. 11: eine weitere Anordnung von Erdkollektoren teilweise unter einer überbauten Fläche und teilweise unter einer Freifläche in der Draufsicht.

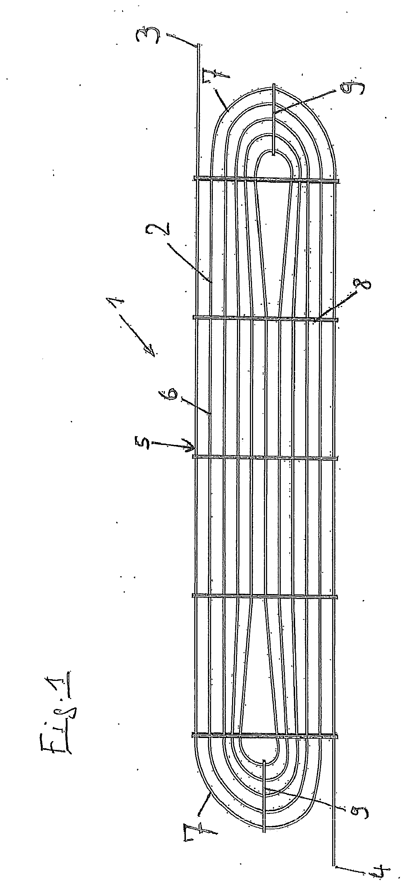

Gemäß Fig. 1 umfasst ein Erdkollektor 1 ein spiralförmig in einer Ebene verlaufendes Rohr 2 mit einem vorlaufseitigen Anschluss 3 und einem rücklaufseitigen Anschluss 4. Das Rohr 2 hat in einem zentralen Abschnitt 5 des Erdkollektors 1 geradlinig und parallel zueinander verlaufende erste Abschnitte 6 und an den Enden des Erdkollektors 1 gebogene und parallel zueinander verlaufende zweite Abschnitte 7. Im Zentralbereich 5 ist das Rohr 2 auf senkrecht zu den geradlinig verlaufenden Abschnitten erstreckten ersten Latten 8 fixiert. In den Endbereichen ist das Rohr 2 jeweils auf einer in Richtung der geradlinigen ersten Abschnitte 5 verlaufenden zweiten Latte 9 fixiert.

Die Längsrichtung des Erdkollektors 1 ist in Richtung der geradlinigen Abschnitte 5. In der zu den geradlinigen ersten Abschnitten 5 senkrechten Querrichtung ist die Ausdehnung des Erdkollektors 1 geringer. Beispielsweise betragen seine Hauptabmessungen 2 m x 10 m oder 2 m x 5 m.

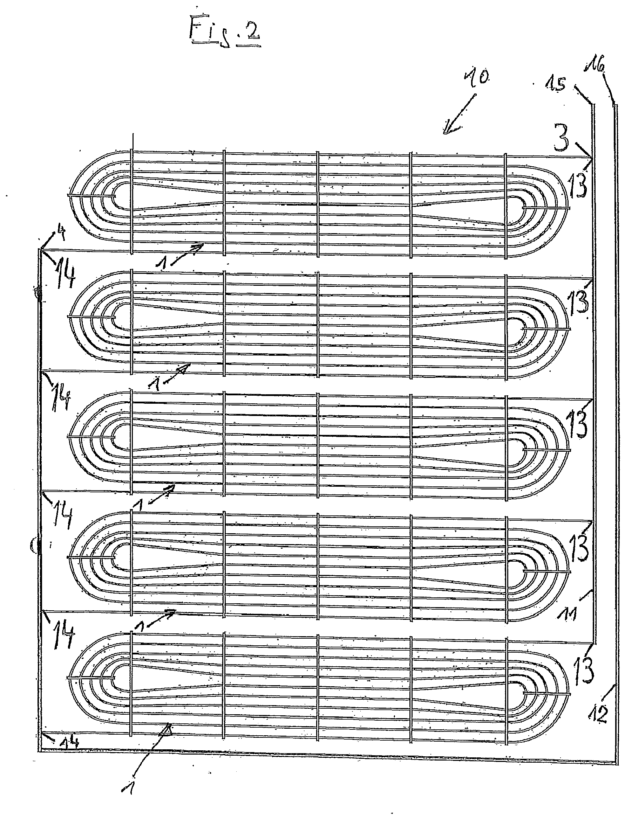

Gemäß Fig. 2 umfasst eine erste Gruppe 10 mehrere gleich ausgebildete Erdkollektoren 1. Die Längen der Rohre 2, sowie ihre Innenquerschnitte, sind bei sämtlichen Erdkollektoren 1 gleich groß. Vorzugsweise sind die Rohre 2 Kreisrohre mit gleichen Innendurchmessern.

Ferner umfasst die erste Gruppe 10 eine erste gemeinsame Vorlaufleitung 11 und eine erste gemeinsame Rücklaufleitung 12, die gleiche Innenquerschnitte aufweisen. Bei Ausführung als Kreisrohr stimmen die Innendurchmesser überein.

Der vorlaufseitige Anschluss 3 jedes Erdkollektors 1 ist über eine erste vorlaufseitige Abzweigung 13 mit der ersten gemeinsamen Vorlaufleitung 11 verbunden. Der rücklaufseitige Anschluss 4 jedes Erdkollektors 1 ist über eine erste rücklaufseitige Abzweigung 14 mit der ersten gemeinsamen Rücklaufleitung 12 verbunden. Die Anordnung ist so ausgebildet, dass der Erdkollektor 1, der mit der ersten vorlaufseitigen Abzweigung 13 verbunden ist, die dem vorlaufseitigen Ende 15 der ersten gemeinsamen Vorlaufleitung 11 am nächsten ist, mit der ersten rücklaufseitigen Abzweigung 14 verbunden ist, die am weitesten entfernt ist vom rücklaufseitigen Ende 16 der ersten gemeinsamen Rücklaufleitung 12.

Der erste Erdkollektor 1, der mit der ersten vorlaufseitigen Abzweigung 13 verbunden ist, die auf die zuvor genannte erste vorlaufseitige Abzweigung 13 folgt, ist mit der ersten rücklaufseitigen Abzweigung 14 verbunden, die der zuvor erwähnten ersten rücklaufseitigen Abzweigung 14 folgt. Infolgedessen ist die Summe der Längen der Abschnitte der ersten gemeinsamen Vorlaufleitung und der ersten gemeinsamen Rücklaufleitung, die von einem Flüssigkeitsteilchen eines Wärmeträgers durchströmt werden, immer dieselbe, unabhängig davon, welchen Erdkollektor 1 es durchströmt.

Infolgedessen ist der Druckabfall beim Durchströmen jedes Erdkollektors 1 derselbe und nimmt jeder Erdkollektor 1 im gleichen Maße am Wärmeübergang auf den Wärmeträger in der ersten Gruppe 10 teil.

Die Erdkollektoren 1 sind in Querrichtung hintereinander angeordnet. Die erste gemeinsame Vorlaufleitung 11 erstreckt sich ausgehend von ihrem vorlaufseitigen Ende 15 und die erste gemeinsame Rücklaufleitung 12 erstreckt sich ausgehend von ihrem rücklaufseitigen Ende 16 in derselben Richtung.

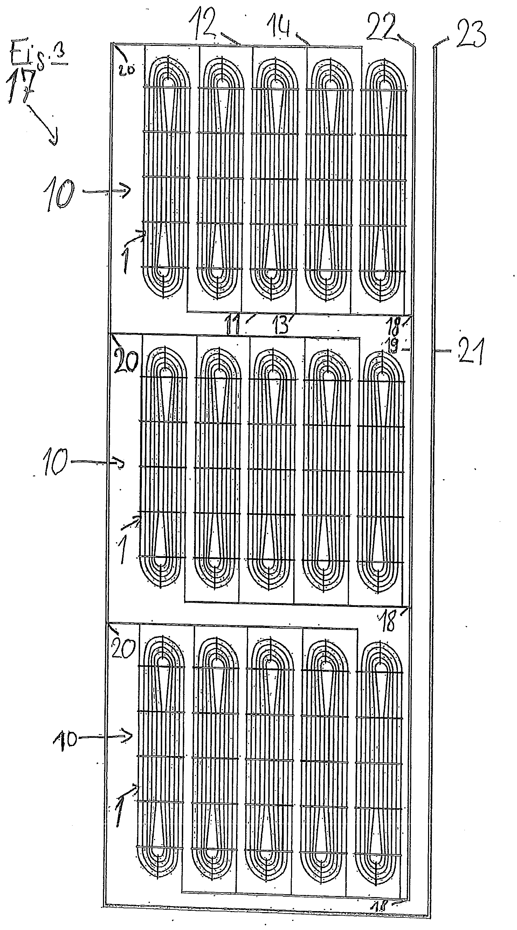

Gemäß Fig. 3 umfasst eine zweite Gruppe 17 mehrere gleich ausgebildete erste Gruppen 10. Sämtliche Erdkollektoren 1 der ersten Gruppen 10 sind gleich ausgebildet. Jede erste Gruppe 10 weist die gleiche Anzahl Erdkollektoren 1 auf. Die Anordnung und der Innenquerschnitt der ersten gemeinsamen Vorlaufleitung 11, sowie die Anordnung und der Innenquerschnitt der ersten gemeinsamen Rücklaufleitung 12, sind in sämtlichen ersten Gruppen 10 gleich. Auch sind die Erdkollektoren 1 in sämtlichen ersten Gruppen 10 in der gleichen Weise über erste vorlaufseitige Abzweigungen 13 und erste rücklaufseitige Abzweigungen 14 mit den ersten gemeinsamen Vorlaufleitungen 11 und den ersten gemeinsamen Rücklaufleitungen 12 verbunden.

Die ersten gemeinsamen Vorlaufleitungen 11 sind über zweite vorlaufseitige Abzweigungen 18 mit einer zweiten gemeinsamen Vorlaufleitung 19 und die ersten gemeinsamen Rücklaufleitungen 12 und über zweite rücklaufseitige Abzweigungen 20 mit einer zweiten gemeinsamen Rücklaufleitung 21 verbunden.

Angrenzend an ihr vorlaufseitiges Ende 22 erstreckt sich die zweite gemeinsame Vorlaufleitung 19 und angrenzend an ihr rücklaufseitiges Ende 23 erstreckt sich die zweite gemeinsame Rücklaufleitung 21 senkrecht zu den ersten gemeinsamen Vorlaufleitungen 11 und den ersten gemeinsamen Rücklaufleitungen 12 der ersten Gruppen.

Die Verbindung der ersten Gruppen 10 mit der zweiten gemeinsamen Vorlaufleitung 19 und der zweiten gemeinsamen Rücklaufleitung 21 ist so ausgebildet, dass jedes Strömungsteilchen beim Durchströmen der zweiten Gruppe 17 denselben Weg zurücklegt, unabhängig davon, welche erste Gruppe 10 es durchströmt. Hierdurch wird ein gleichmäßiger Wärmeübergang auf die Erdkollektoren 1 begünstigt.

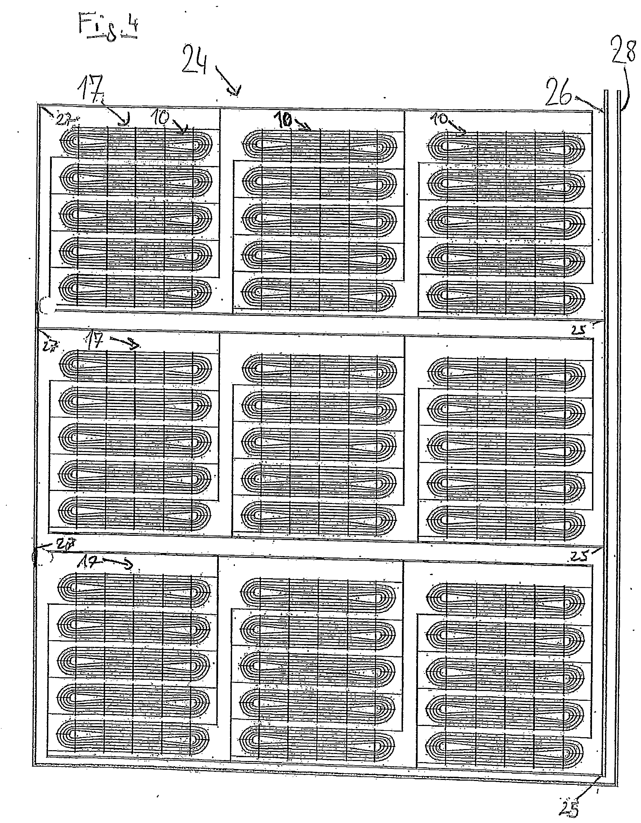

Gemäß Fig. 4 umfasst eine dritte Gruppe 24 mehrere zweite Gruppen 17. Jede zweite Gruppe 17 besteht aus der gleichen Anzahl gleich ausgebildeter erster Gruppen 10. Die zweiten Gruppen 17 sind jeweils über eine dritte vorlaufseitige Abzweigung 25 mit der dritten gemeinsamen Vorlaufleitung 26 und über eine dritte rücklaufseitige Abzweigung 27 mit der dritten gemeinsamen Rücklaufleitung 28 verbunden. Die Verbindung der zweiten Gruppen 17 mit der dritten gemeinsamen Vorlaufleitung 26 und der dritten gemeinsamen Rücklaufleitung 28 ist so gewählt, dass jedes Strömungsteilchen beim Durchströmen der dritten Gruppe 24 denselben Weg zurücklegt, unabhängig davon, welche zweite Gruppe 17, welche erste Gruppe 10 und welchen Erdkollektor 1 das erste Teilchen durchströmt. Dies begünstigt einen gleichmäßigen Wärmeübergang auf jeden Erdkollektor 1.

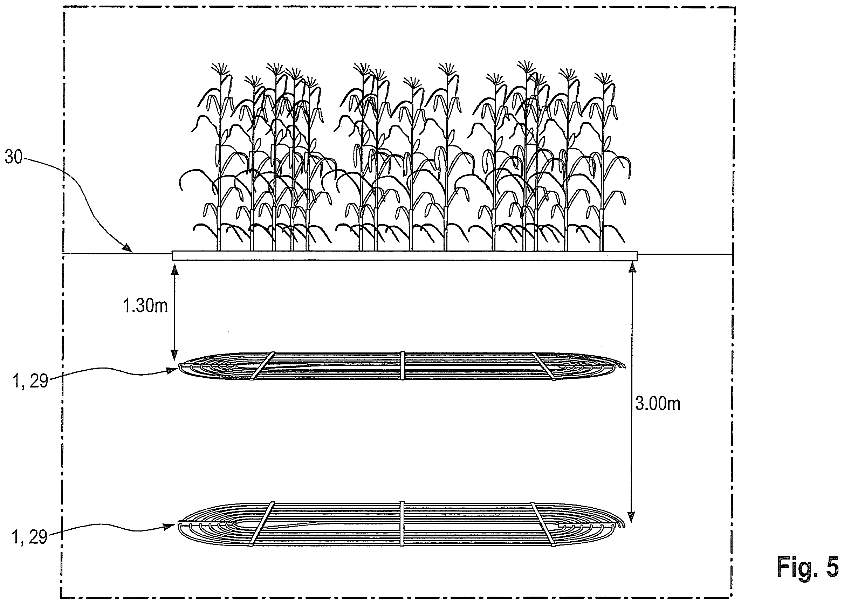

Gemäß Fig. 5 sind zwei gleich ausgebildete Erdkollektoren 1 in verschiedenen Lagen 29 unter einem Feld 30 angeordnet. Hierdurch kann der Verlegungsaufwand reduziert werden.

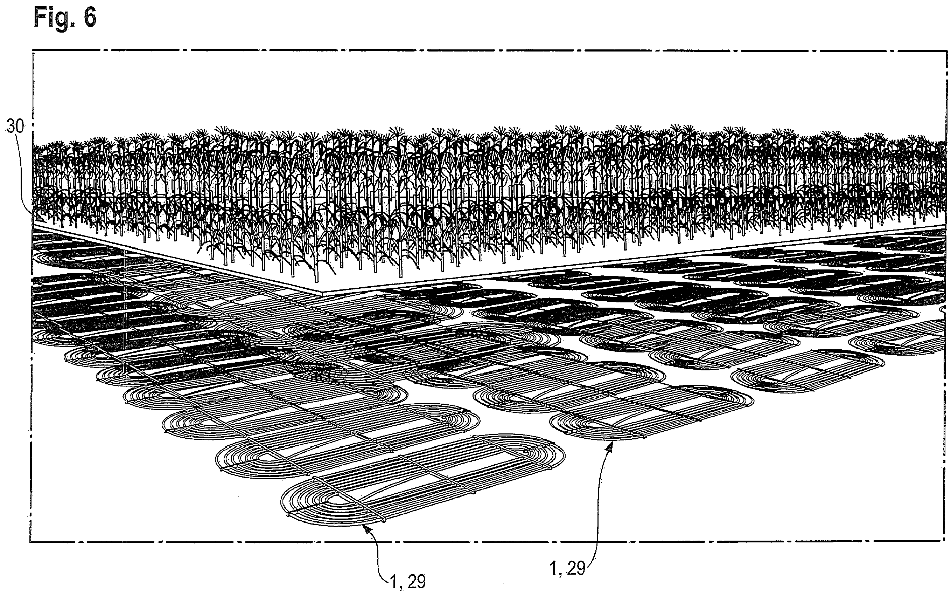

Gemäß Fig. 6 ist eine Vielzahl Erdkollektoren 1 gleicher Bauart in zwei Lagen 29 übereinander unter einem Feld 30 angeordnet. Die Erdkollektoren 1 können in einer einzigen ersten Gruppe 10 zusammengeschaltet sein oder in mehreren über- und untergeordneten Gruppen 17, 23 zusammengeschaltet sein.

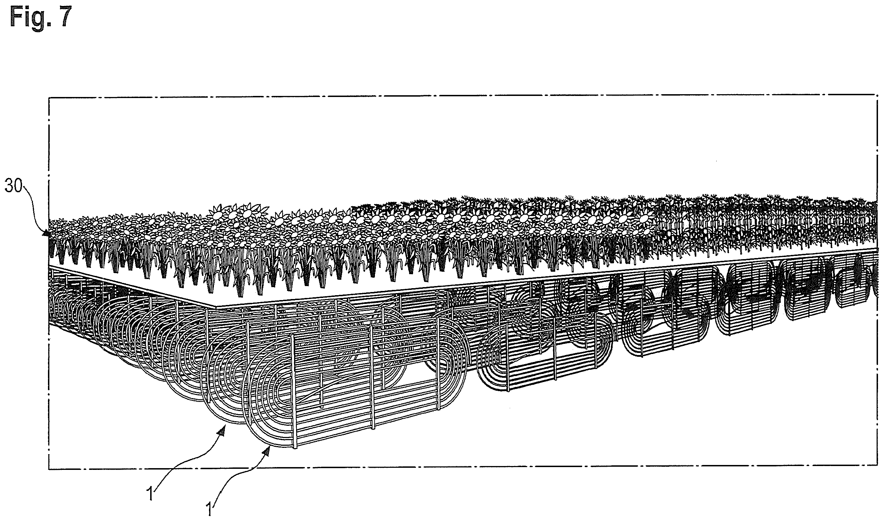

Gemäß Fig. 7 wird eine Vielzahl Erdkollektoren 1 gleicher Bauart vertikal unter einem Feld 30 angeordnet. Für die Verlegung der Erdkollektoren 1 können Schlitze oder Gräben gezogen werden, die nach dem Einsetzen der Erdkollektoren 1 wieder mit Erdreich verfüllt werden. Hinsichtlich wird der Aufwand für den Erstaushub und damit der Verlegungsaufwand weiter reduziert. Die Erdkollektoren 1 können in einer einzigen ersten Gruppe 10 oder in mehreren über- und untergeordneten Gruppen 17, 23 zusammengeschaltet sein.

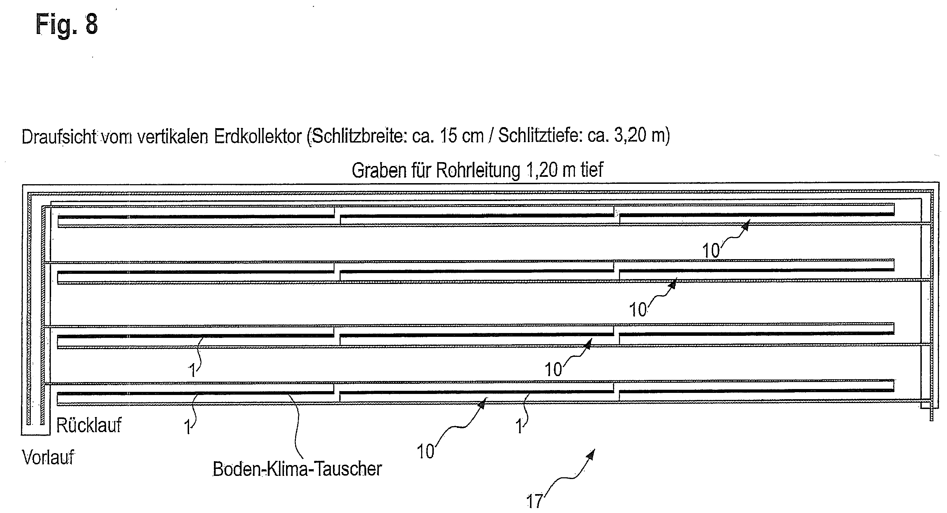

Gemäß Fig. 8 sind vertikal verlegte Erdkollektoren 1 in vier ersten Gruppen 10 bestehend aus jeweils drei Erdkollektoren 1 miteinander verbunden. Die vier ersten Gruppen 10 sind wiederum zu einer übergeordneten zweiten Gruppe 17 miteinander verbunden.

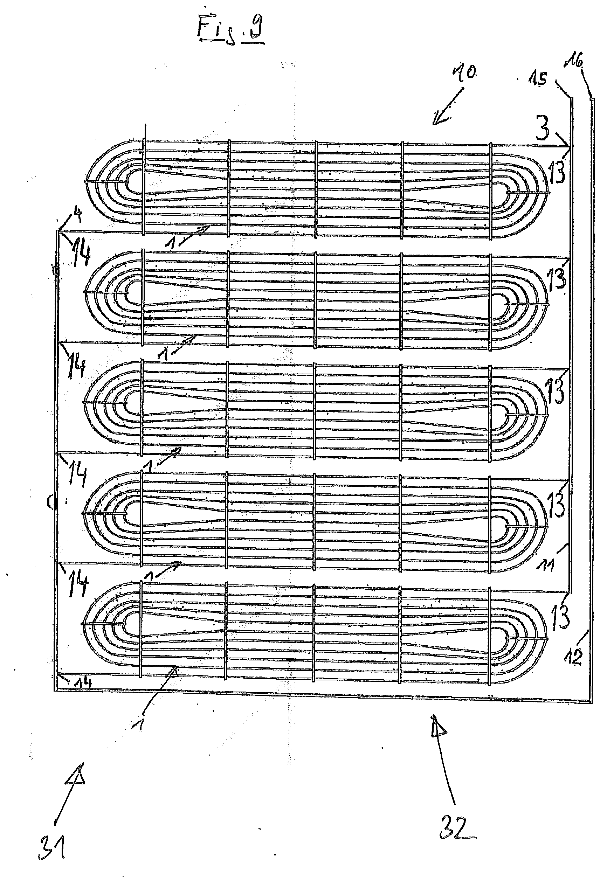

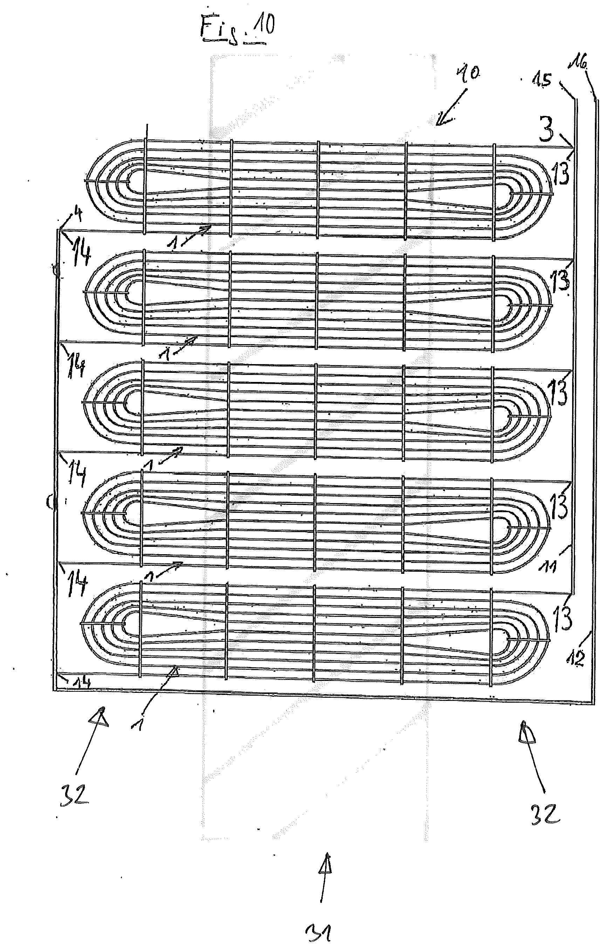

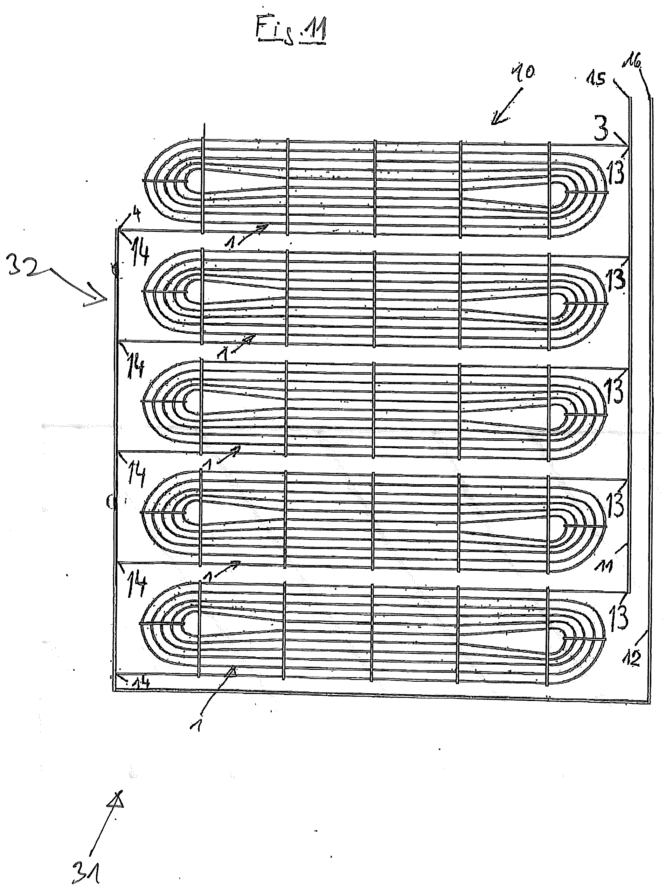

Die Fig. 9 bis 11 zeigen verschiedene Anordnungen einer ersten Gruppe 10 aus Erdkollektoren 1 unter einer überbauten Fläche 31 (schraffiert) und unter einer oder mehreren Freiflächen 32 (nicht schraffiert). Je nach den baulichen und lokalen klimatischen Gegebenheiten können unterschiedliche Flächen für die oberflächennahe Geothermie genutzt werden.

## Patentansprüche

1. Anordnung von Erdkollektoren (1) für Großanlagen in der kalten Nahwärmenutzung umfassend eine erste Gruppe (10) aus Erdkollektoren (1), die jeweils vorlaufseitig über eine erste vorlaufseitige Abzweigung (13) mit einer ersten gemeinsamen Vorlaufleitung (11) und rücklaufseitig über eine erste rücklaufseitige Abzweigung (14) mit einer ersten gemeinsamen Rücklaufleitung (12) verbunden sind, wobei die erste gemeinsame Vorlaufleitung (11), die Erdkollektoren (1) einschließlich ihrer Verbindungen mit den ersten vorlaufseitigen Abzweigungen (13) und den ersten rücklaufseitigen Abzweigungen (14) und die erste gemeinsame Rücklaufleitung (12) so ausgebildet sind, dass für jeden Erdkollektor (1) die Summe der Druckverluste für die Durchströmung (i.) der ersten gemeinsamen Vorlaufleitung (11) von ihrem vorlaufseitigen Ende (15) bis zu der ersten vorlaufseitigen Abzweigung (13) zu diesem Erdkollektor (1), (ii.) dieses Erdkollektors (1) und seiner Verbindungen mit den ersten vorlaufseitigen Abzweigungen (13) und den ersten rücklaufseitigen Abzweigungen (14) und (iii.) der ersten gemeinsamen Rücklaufleitung (12) ab der ersten rücklaufseitigen Abzweigung (14) zu diesem Erdkollektor (1) bis zu ihrem rücklaufseitigen Ende (16) gleich groß ist.

2. Anordnung nach Anspruch 1, umfassend eines oder mehrere der nachfolgenden Merkmale:
• die Erdkollektoren (1) haben Rohre (2) mit übereinstimmenden Innendurchmessern und mit übereinstimmenden Längen,
• die Verbindungen der Erdkollektoren (1) mit den ersten vorlaufseitigen Abzweigungen (13) haben übereinstimmende Innendurchmesser und Längen,
• die Verbindungen der Erdkollektoren (1) mit den ersten rücklaufseitigen Abzweigungen (14) haben übereinstimmende Innendurchmesser und Längen,
• die ersten gemeinsamen Vorlauf- und Rücklaufleitungen (11, 12) weisen gleiche Innenquerschnitte auf und die Summe der Längen der ersten gemeinsamen Vorlaufleitung (10) von ihrem vorlaufseitigen Ende (15) bis zu der ersten vorlaufseitigen Abzweigung zu einem bestimmten Erdkollektor (1) und der ersten gemeinsamen Rücklaufleitung (12) ab der ersten rücklaufseitigen Abzweigung (14) zu diesem Erdkollektor (1) bis zu ihrem rücklaufseitigen Ende (16) sind gleich lang.

3. Anordnung nach Anspruch 1 oder 2, umfassend eine n-te Gruppe (24) aus mehreren (n-1)ten Gruppen (17) mit gleichem Druckverlust, die jeweils vorlaufseitig über eine n-te vorlaufseitige Abzweigung (25) mit einer n-ten gemeinsamen Vorlaufleitung (26) und rücklaufseitig über eine n-te rücklaufseitige Abzweigung (27) mit einer n-ten gemeinsamen Rücklaufleitung (28) verbunden sind, wobei die n-te gemeinsame Vorlaufleitung (26) und die n-te gemeinsame Rücklaufleitung (28) so ausgebildet sind, dass für jede (n-1)te Gruppe (17) die Summe der Druckverluste für die Durchströmung der n-ten gemeinsamen Vorlaufleitung (26) von ihrem vorlaufseitigen Ende bis zur n-ten vorlaufseitigen Abzweigung (25) zu dieser (n-1)-ten Gruppe (17) und der n-ten gemeinsamen Rücklaufleitung (28) ab der n-ten rücklaufseitigen Abzweigung (27) zu dieser (n-1)-ten Gruppe (17) bis zu ihrem rücklaufseitigen Ende gleich groß ist, wobei n eine ganze Zahl ist, die gleich oder größer 2 ist.

4. Anordnung nach Anspruch 3, umfassend eines oder mehrere der folgenden Merkmale:
• die (n-1)-ten Gruppen sind gleich ausgebildet,
• die n-te gemeinsame Vorlaufleitung (26) und die n-te gemeinsame Rücklaufleitung (28) weisen gleiche n-te Innenquerschnitte auf und für jede (n-1)-te Gruppe (17) die Summe der Längen der n-ten gemeinsamen Vorlaufleitung (26) von ihrem vorlaufseitigen Ende bis zur n-ten vorlaufseitigen Abzweigung (25) zu dieser Gruppe und der n-ten gemeinsamen Rücklaufleitung (28) ab der n-ten rücklaufseitigen Abzweigung (27) zu dieser (n-1)-ten Gruppe (17) bis zu ihrem rücklaufseitigen Ende gleich groß ist.

5. Anordnung nach einem der Ansprüche 1 bis 4 umfassend eines oder mehrere der nachfolgenden Merkmale:
• die Erdkollektoren weisen jeweils ein in einer Ebene schlaufenförmig, spiralförmig oder mäanderförmig verlaufendes Rohr (2) auf,
• das Rohr (2) weist in einem zentralen Abschnitt (5) des Erdkollektors geradlinig und parallel zueinander verlaufende erste Abschnitte (6) und an den Enden des Erdkollektors (1) gebogene und parallel zueinander verlaufende zweite Abschnitte (7) auf.

6. Anordnung nach Anspruch 5, bei der das Rohr (2) auf einer Tragstruktur angeordnet ist, vorzugsweise auf Latten (8, 9) oder auf einem Lattengerüst.

7. Anordnung nach Anspruch 6, bei der die geradlinigen ersten Abschnitte (6) des Rohres (2) auf mindestens einer senkrecht zum Verlauf dieser Abschnitte erstreckten ersten Latte (8) fixiert sind und die gebogenen zweiten Abschnitte (7) des Rohres (2) auf parallel zu den geradlinigen ersten Abschnitten (6) verlaufenden zweiten Latten (9) fixiert sind.

8. Anordnung nach einem der Ansprüche 5 bis 7, bei der die Erdkollektoren (1) in Richtung der geradlinigen ersten Abschnitte (6) (Längsrichtung) der Rohre (2) eine größere Ausdehnung als in Richtung senkrecht zu den geradlinigen ersten Abschnitten (6) (Querrichtung) aufweisen.

9. Anordnung nach einem der Ansprüche 1 bis 8, bei der mindestens einer der Erdkollektoren aus mehreren kleineren Kollektorelementen zusammengesetzt ist, die zusammengesetzt einem einzigen Erdkollektor entsprechen.

10. Anordnung nach einem der Ansprüche 1 bis 9 umfassend eines oder mehrere der nachfolgenden Merkmale:
• mehrere horizontal verlegte und/oder mehrere vertikal verlegte Erdkollektoren (1),
• in mehreren Lagen übereinander verlegte Erdkollektoren (1),
• mehrere in ihrer Querrichtung hintereinander angeordnete Erdkollektoren (1) und/oder mehrere in ihrer Längsrichtung hintereinander angeordnete Erdkollektoren (1).

11. Anordnung nach einem der Ansprüche 1 bis 10 umfassend eines oder mehrere der nachfolgenden Merkmale:
• eine erste Gruppe (10) mit in einer bestimmten horizontalen Richtung hintereinander angeordneten Erdkollektoren (1) und in derselben Richtung verlegte, an das vorlaufseitige Ende und an das rücklaufseitige Ende angrenzende Abschnitte der ersten gemeinsamen Vorlaufleitung (11) und der ersten gemeinsamen Rücklaufleitung (12),
• in einer bestimmten horizontalen Richtung hintereinander erstreckte zweite Gruppen (17) und in derselben Richtung verlegte, an das vorlaufseitige Ende und an das rücklaufseitige Ende angrenzende Abschnitte der zweiten gemeinsamen Vorlaufleitung (19) und der zweiten gemeinsamen Rücklaufleitung (21),
• in einer bestimmten horizontalen Richtung hintereinander angeordnete n-te Gruppen (24) und in derselben Richtung verlegte, an das vorlaufseitige Ende und an das rücklaufseitige Ende angrenzende Abschnitte der n-ten gemeinsamen Vorlaufleitung (26) und der n-ten gemeinsamen Rücklaufleitung (28).

12. Anordnung nach Anspruch 11, bei der die n-ten gemeinsamen Vorlaufleitungen (26) und die n-ten gemeinsamen Rücklaufleitungen (28) senkrecht zu den (n-1)-ten gemeinsamen Vorlaufleitungen (19) und den (n-1)-ten gemeinsamen Rücklaufleitungen (20) verlaufen.

13. Anordnung gemäß einer der Ansprüche 1 bis 12, bei der die Erdkollektoren (1) unter einem Feld und/oder unter einer Grünfläche und/oder unter einem Gebäude und/oder einer befestigten Fläche und/oder einer Wasserfläche angeordnet sind.

14. Anordnung gemäß einem der Ansprüche 1 bis 13, bei der die Erdkollektoren (1) teilweise unter einer Freifläche (32) und teilweise unter einer überbauten Fläche (31) angeordnet sind.

15. Erdwärmeheizung umfassend eine Anordnung von Erdkollektoren (1) gemäß einem der Ansprüche 1 bis 14, mindestens eine Wärmepumpe und ein oder mehrere Wärmeübergabesysteme.

16. Erdwärmeheizung gemäß Anspruch 15, die eine Umschalteinrichtung umfasst, welche der Wärmeträger an der Wärmepumpe vorbei direkt in die Wärmeübergabesysteme einspeist, um das Gebäude bei erhöhten Außentemperaturen mittels des Wärmeträgers zu kühlen, wobei die Wärmeübergabesysteme vorzugsweise Flächensysteme in Fußboden, Wand oder Decke sind.

17. Erdwärmeheizung gemäß Anspruch 15 oder 16, die eine aktive Kühlung über die Wärmepumpe zulässt (reversible Wärmepumpe).

18. Erdwärmeheizung gemäß Anspruch 17, allerdings nicht mit reversibler Wärmepumpe, sondern als Rückkühlung für eine Kältemaschine.
